# EUROPÄISCHE PATENTANMELDUNG

(11) **EP 4 316 762 A1**
(43) Veröffentlichungstag der Anmeldung: **07.02.2024**
(21) Anmeldenummer: 22188918.1
(22) Anmeldetag: 05.08.2022
(51) Int. Cl.: B29B 7/48, B29B 7/60, B29B 7/88, B29C 48/50, B29B 7/72

(54) **BEHANDLUNGSELEMENT ZUM BEHANDELN VON MATERIAL MITTELS EINER SCHNECKENMASCHINE**

(71) Anmelder: Coperion GmbH, 70469 Stuttgart (DE)
(72) Erfinder: Heyn, Johannes, 73730 Esslingen am Neckar (DE); Tabeling, Mareike, 70327 Stuttgart (DE); Donner, Johannes, 70439 Stuttgart (DE); Kyrion, Dirk, 75447 Sternenfels (DE)
(74) Vertreter: Rau, Schneck & Hübner Patentanwälte Rechtsanwälte PartGmbB

(57) **Zusammenfassung**

Ein Behandlungselement (30, 30') zum Behandeln von Material mittels einer Schneckenmaschine umfasst einen Förderabschnitt (31) und einen Aufschmelzabschnitt (32). Der Aufschmelzabschnitt (32) ist in einer Förderrichtung (18) nach dem Förderabschnitt (31) angeordnet und einteilig mit dem Förderabschnitt (31) verbunden. Hierdurch wird der Verschleiß reduziert und die Standzeit erhöht.

## Beschreibung

Die Erfindung betrifft ein Behandlungselement zum Behandeln von Material mittels einer Schneckenmaschine. Ferner betrifft die Erfindung eine Schneckenmaschine mit einem derartigen Behandlungselement.

Aus der EP 1 508 424 A1 (entspricht US 2005/0041521 A1) ist eine Schneckenmaschine bekannt, die ein Gehäuse und profilierte Wellen mit darauf angeordneten Behandlungselementen umfasst. In einer Einzugszone sind Förderelemente bzw. Schneckenelemente als Behandlungselemente auf den profilierten Wellen angeordnet. In einer Misch- und Knetzone, die in einer Förderrichtung stromabwärts zu der Einzugszone ausgebildet ist, sind zum Aufschmelzen und Homogenisieren des aufzubereitenden Materials Knetblöcke als Behandlungselemente auf den profilierten Wellen angeordnet. Die Knetblöcke umfassen jeweils mehrere einteilig miteinander ausgebildete Knetscheiben. In einer stromabwärts zu der Misch- und Knetzone ausgebildeten Druckaufbauzone sind wiederum Schneckenelemente als Behandlungselemente auf den profilierten Wellen angeordnet.

In der Misch- und Knetzone wird das aufzubereitende Material aufgeschmolzen. Dort wirken auf die Behandlungselemente und die zugehörigen Wellen hohe Belastungen, die einen hohen Verschleiß an den Behandlungselementen, den Wellen und dem Gehäuse verursachen und deren Standzeiten reduzieren.

Der Erfindung liegt die Aufgabe zugrunde, ein Behandlungselement zum Behandeln von Material mittels einer Schneckenmaschine zu schaffen, das einen geringen Verschleiß und eine hohe Standzeit hat.

Diese Aufgabe wird durch ein Behandlungselement mit den Merkmalen des Anspruchs 1 gelöst. Das Behandlungselement dient zum Behandeln und/oder Aufschmelzen von Material, insbesondere von Kunststoff-Material, mittels einer Schneckenmaschine. Das Behandlungselement umfasst einen Förderabschnitt und einen in der Förderrichtung danach angeordneten Aufschmelzabschnitt, die einteilig miteinander verbunden sind. Der Förderabschnitt umfasst insbesondere ein Förderelement bzw. Schneckenelement zum Fördern des zu behandelnden Materials. Der Aufschmelzabschnitt umfasst insbesondere mindestens eine Knetscheibe. Die mindestens eine Knetscheibe dient zum Einbringen von Energie in das zu behandelnde Material und/oder zum Aufschmelzen des zu behandelnden Materials. Das Behandlungselement ist insbesondere als Kombi-Behandlungselement ausgebildet, da durch die einteilige Ausbildung des Förderabschnitts und des Aufschmelzabschnitts die Funktionen des Förderns und des Aufschmelzens miteinander kombiniert sind. Das Behandlungselement umfasst insbesondere eine profilierte Durchgangsbohrung zum Befestigen des Behandlungselements auf einer profilierten Welle einer Schneckenmaschine.

Durch die einteilige Ausbildung des Förderabschnitts und des Aufschmelzabschnitts kann trotz hoher Belastungen zwischen dem Förderabschnitt und dem Aufschmelzabschnitt kein Spalt entstehen, in den Material bzw. Materialschmelze eindringen könnte. Durch die einteilige Ausbildung ist somit die spezifische Belastung, also die Belastung pro Flächeneinheit, auf das Behandlungselement sowie eine zugehörige profilierte Welle reduziert. Darüber hinaus ist die Steifigkeit des Behandlungselements an dem kritischen Übergang zwischen dem Förderabschnitt und dem Aufschmelzabschnitt erhöht, so dass Relativbewegungen und Verformungen des Behandlungselements im Betrieb der Schneckenmaschine reduziert sind. Hierdurch wird der Verschleiß reduziert und die Standzeit erhöht. Insbesondere kann die Gefahr von Brüchen der Wellen reduziert werden.

Ein Behandlungselement nach Anspruch 2 gewährleistet einen geringen Verschleiß und eine hohe Standzeit. Der Aufschmelzabschnitt ist einteilig ausgebildet. Insbesondere sind mehrere Knetscheiben einteilig miteinander verbunden. Weist der Aufschmelzabschnitt mehrere miteinander verbundene Knetscheiben auf, so werden in dem Aufschmelzabschnitt auftretende Belastungen im Betrieb der Schneckenmaschine über mehrere Knetscheiben verteilt. Die jeweilige Knetscheibe kann eingängig bis viergängig ausgebildet sein. Vorzugsweise ist die jeweilige Knetscheibe zweigängig oder dreigängig ausgebildet. Die Knetscheiben des Aufschmelzabschnitts können geometrisch identisch und/oder geometrisch unterschiedlich ausgebildet sein.

Ein Behandlungselement nach Anspruch 3 gewährleistet einen geringen Verschleiß und eine hohe Standzeit. Jede Knetscheibe hat eine erste Seite, die bezogen auf die Förderrichtung stromaufwärts gerichtet ist, und eine zweite Seite, die bezogen auf die Förderrichtung stromabwärts gerichtet ist. Zwei unmittelbar nacheinander angeordnete Knetscheiben haben an ihren ersten Seiten und/oder an ihren zweiten Seiten zueinander einen Versatzwinkel c, so dass durch die Anordnung der Knetscheiben das Fördern des Materials unterstützt wird. Durch den Versatzwinkel c ist die Verweilzeit des Materials in dem Aufschmelzabschnitt und somit die Energieeinleitung bzw. Aufschmelzung einerseits und die Belastung andererseits einstellbar.

Ein Behandlungselement nach Anspruch 4 gewährleistet einen geringen Verschleiß und eine hohe Standzeit. Jede Knetscheibe hat eine erste Seite, die bezogen auf die Förderrichtung stromaufwärts gerichtet ist, und eine zweite Seite, die bezogen auf die Förderrichtung stromabwärts gerichtet ist. Die erste Seite ist zu der zweiten Seite um einen Verdrillwinkel d versetzt, so dass die Knetscheibe von der ersten Seite zu der zweiten Seite verdrillt ist. Wird das Behandlungselement auf einer zugehörigen profilierten Welle einer Schneckenmaschine angeordnet, so wird hierdurch die Belastung auf das jeweilige Behandlungselement reduziert. In einem Gehäuse einer Mehrwellen-Schneckenmaschine sind mindestens zwei einander durchdringende Gehäusebohrungen ausgebildet, so dass das Gehäuse mindestens einen Zwickelbereich ausbildet. Als Zwickelbereich ist der spitz zulaufende Gehäusebereich bezeichnet, der durch die sich schneidenden mindestens zwei Gehäusebohrungen gebildet ist. Durch den Verdrillwinkel wird verhindert, dass das aufzubereitende Material in dem Zwickelbereich eingeklemmt wird. Der Verdrillwinkel erzeugt eine fördernde Wirkung. Der Verdrillwinkel erzeugt einen auf das Material wirkenden Axialimpuls und dadurch eine Vorzugsrichtung, so dass in dem Zwickelbereich geringere Kräfte auf das Material und somit auch auf das Behandlungselement wirken, was zu einer geringeren Beanspruchung und zu weniger Schäden führt. Darüber hinaus wird durch den Verdrillwinkel das Volumen des Materials reduziert, das in dem Zwickelbereich gleichzeitig eingeschlossen ist. Durch das Absenken der in dem Zwickelbereich wirkenden Kräfte wird die Belastung, insbesondere ein Biegemoment und/oder ein Torsionsmoment, das auf das Behandlungselement und die zugehörige Welle wirkt, reduziert. Schwingungen der Behandlungselementwellen der Mehrwellen-Schneckenmaschine können reduziert werden, so dass Verschleiß und Schäden an dem Gehäuse und/oder an den Behandlungselementen reduziert und/oder an den Wellen vermieden werden.

Ein Behandlungselement nach Anspruch 5 gewährleistet einen geringen Verschleiß und eine hohe Standzeit. Weist der Aufschmelzabschnitt mehrere Knetscheiben auf, so können einzelne der Knetscheiben oder alle Knetscheiben einen Verdrillwinkel d haben. Der Verdrillwinkel der Knetscheiben kann identisch und/oder unterschiedlich sein.

Ein Behandlungselement nach Anspruch 6 gewährleistet einen geringen Verschleiß und eine hohe Standzeit. Aufgrund der Verdrillung der mindestens einen Knetscheibe definiert das jeweilige Profil der Knetscheibe in der Förderrichtung eine Schraubenlinie. Diese Schraubenlinie definiert bei einer vollen Umdrehung, also einem Winkel von 360°, in der Förderrichtung die Ganghöhe P_{A}. Die Ganghöhe P_{A} wird auch als Steigung bezeichnet. Durch das Verhältnis der Ganghöhe P_{A} zu dem Außendurchmesser D_{AA} wird bei einer Mehrwellen-Schneckenmaschine die Belastung im Zwickelbereich zwischen benachbarten, paarweise angeordneten Behandlungselementen reduziert. Der Verdrillwinkel d ergibt sich aus der Ganghöhe P_{A} und einer Breite L_{A} der jeweiligen Knetscheibe.

Ein Behandlungselement nach Anspruch 7 gewährleistet einen geringen Verschleiß und eine hohe Standzeit. Jede Knetscheibe hat eine erste Seite, die bezogen auf die Förderrichtung stromaufwärts gerichtet ist, und eine zweite Seite, die bezogen auf die Förderrichtung stromabwärts gerichtet ist. Zwei unmittelbar nacheinander angeordnete Knetscheiben sind zwischen der zweiten Seite der Knetscheibe, die stromaufwärts angeordnet ist, und der ersten Seite der Knetscheibe, die stromabwärts angeordnet ist, miteinander verbunden. Zwischen der zweiten Seite der stromaufwärts angeordneten Knetscheibe und der ersten Seite der stromabwärts angeordneten Knetscheibe ist der Versatzwinkel e ausgebildet. Für den Versatzwinkel e gilt insbesondere: e = b - d, wobei b einen Versatzwinkel zwischen ersten Seiten und/oder zweiten Seiten von zwei aufeinanderfolgenden Knetscheiben und d einen Verdrillwinkel der stromaufwärts angeordneten Knetscheibe bezeichnet. Durch den Versatzwinkel e kann ein Fördern des Materials unterstützt werden. Hierdurch kann die Verweilzeit des Materials in dem Aufschmelzabschnitt beeinflusst werden. Durch den Versatzwinkel e wird einerseits der Energieeintrag und die Aufschmelzung und andererseits die Belastung des Behandlungselements beeinflusst bzw. eingestellt.

Ein Behandlungselement nach Anspruch 8 gewährleistet einen geringen Verschleiß und eine hohe Standzeit. Die Breite L_{A} ist auf die Förderrichtung bezogen. Durch die Anzahl der Knetscheiben und/oder das Verhältnis der Breite L_{A} zu dem Außendurchmesser D_{AA} wird einerseits der Energieeintrag in das Material und das Aufschmelzen des Materials und andererseits die Belastung des Behandlungselements beeinflusst. Je mehr Knetscheiben der Aufschmelzabschnitt umfasst und/oder je breiter die jeweilige Knetscheibe ist, desto steifer und stabiler ist das Behandlungselement.

Ein Behandlungselement nach Anspruch 9 gewährleistet einen geringen Verschleiß und eine hohe Standzeit. Die jeweilige Knetscheibe hat mehrere Kanten. Eine erste umlaufende Kante ist zwischen einer ersten Seite, die bezogen auf die Förderrichtung stromaufwärts gerichtet ist, und einer Umfangsseite angeordnet. Entsprechend ist eine zweite umlaufende Kante zwischen einer zweiten Seite, die bezogen auf die Förderrichtung stromabwärts gerichtet ist, und der Umfangsseite angeordnet. Dritte Kanten können an der Umfangsseite angeordnet sein und verlaufen quer zu der ersten Kante und/oder der zweiten Kante. Beispielsweise verlaufen bei mehrgängigen Knetscheiben Kanten zwischen dem jeweiligen Kammbereich und dem benachbarten Flankenbereich. Durch den Kantenbruch wird das Volumen der jeweiligen Knetscheibe reduziert, so dass umgekehrt das freie Volumen in einer Gehäusebohrung einer Schneckenmaschine erhöht wird. Dadurch, dass das freie Volumen erhöht wird, wird die Belastung durch das Material auf das Behandlungselement und die zugehörige profilierte Welle reduziert. Insbesondere wird das freie Volumen in dem Zwickelbereich vergrößert, so dass die Belastung in dem Zwickelbereich reduziert wird. Der Kantenbruch ist insbesondere als Fase und/oder Rundung ausgeführt. Vorzugsweise verläuft der Kantenbruch über mindestens 25 %, insbesondere mindestens 50 % und insbesondere mindestens 75 % der Länge der jeweiligen Kante. Vorzugsweise kann die Umfangsseite der jeweiligen Knetscheibe ohne eine Kante ausgebildet sein. Ein derartiges Profil einer Knetscheibe wird auch als involutes Profil bzw. die Knetscheibe als involute Knetscheibe bezeichnet. Derartige Profile sind beispielsweise in der WO 2011/039 016 A1 offenbart, worauf verwiesen wird.

Ein Behandlungselement nach Anspruch 10 gewährleistet einen geringen Verschleiß und eine hohe Standzeit. Vorzugsweise umfasst der Förderabschnitt ein Förderelement bzw. ein Schneckenelement. Das Profil des Förderabschnitts bzw. Förderelements ist insbesondere ein- bis viergängig ausgebildet, vorzugsweise zweigängig oder dreigängig. Das Profil des Förderabschnitts bzw. des Förderelements definiert in der Förderrichtung eine Schraubenlinie. Die Schraubenlinie definiert bei einer vollen Umdrehung, also bei einem Winkel von 360°, eine Ganghöhe P_{F}. Diese Ganghöhe wird auch als Steigung bezeichnet. Durch das Verhältnis der Ganghöhe P_{F} zu dem Außendurchmesser D_{AF} wird die Förderwirkung des Förderabschnitts eingestellt. Die Förderwirkung bestimmt, welche Menge an Material pro Zeiteinheit dem Aufschmelzabschnitt zugeführt wird. Über das Verhältnis der Ganghöhe P_{F} zu dem Außendurchmesser D_{AF} wird somit die Belastung in dem Übergangsbereich zwischen dem Förderabschnitt und dem Aufschmelzabschnitt eingestellt. Der Förderabschnitt kann ein Erdmenger-Profil, ein Schubkanten-Profil und/oder ein involutes Profil aufweisen.

Ein Behandlungselement nach Anspruch 11 gewährleistet einen geringen Verschleiß und eine hohe Standzeit. Die Länge L_{F} ist auf die Förderrichtung bezogen. Das Profil des Förderabschnitts definiert in der Förderrichtung eine Schraubenlinie. Die Schraubenlinie hat bei einer vollen Umdrehung, also bei einem Winkel von 360°, eine Ganghöhe P_{F}. Die Ganghöhe P_{F} wird auch als Steigung bezeichnet. Durch das Verhältnis der Länge L_{F} zu der Ganghöhe P_{F} wird die Förderwirkung des Förderabschnitts eingestellt. Hierdurch wird die Belastung in dem Übergangsbereich zwischen dem Förderabschnitt und dem Aufschmelzabschnitt eingestellt.

Ein Behandlungselement nach Anspruch 12 gewährleistet einen geringen Verschleiß und eine hohe Standzeit. Durch den Versatzwinkel b wird die Förderwirkung und die Belastung in dem Übergangsbereich zwischen dem Förderabschnitt und dem Aufschmelzabschnitt eingestellt. Der Aufschmelzabschnitt hat insbesondere eine erste Seite, die bezogen auf die Förderrichtung stromaufwärts gerichtet ist. Demgegenüber hat der Förderabschnitt insbesondere eine zweite Seite, die bezogen auf die Förderrichtung stromabwärts gerichtet ist. Die erste Seite des Aufschmelzabschnitts ist mit der zweiten Seite des Förderabschnitts insbesondere einteilig verbunden, wobei zwischen der zweiten Seite des Förderabschnitts und der ersten Seite des Aufschmelzabschnitts der Versatzwinkel b ausgebildet ist. Vorzugsweise ist der Versatzwinkel b zwischen einer zweiten Seite eines Förderelements des Förderabschnitts und einer ersten Seite einer Knetscheibe des Aufschmelzabschnitts ausgebildet. Für den Versatzwinkel b gilt insbesondere: 0° ≤ b ≤ 5°, insbesondere 0° ≤ b ≤ 1°, und insbesondere b = 0°.

Ein Behandlungselement nach Anspruch 13 gewährleistet einen geringen Verschleiß und eine hohe Standzeit. Durch den Stützabschnitt werden radiale Bewegungen des Behandlungselements reduziert. Hierdurch werden der Verschleiß und etwaige Schäden reduziert und die Standzeit des Behandlungselements erhöht. Durch den Stützabschnitt wird der funktionsgemäße Einsatz des Aufschmelzabschnitts sichergestellt. Darüber hinaus wird die Steifigkeit des Behandlungselements erhöht. Die auf das Behandlungselement wirkenden Belastungen werden über die Länge des Behandlungselements besser verteilt.

Vorzugsweise weist der Stützabschnitt eine erste Seite auf, die bezogen auf die Förderrichtung stromaufwärts gerichtet ist und mit dem Aufschmelzabschnitt verbunden ist. Der Aufschmelzabschnitt weist vorzugsweise eine zweite Seite auf, die bezogen auf die Förderrichtung stromabwärts gerichtet ist und mit dem Stützabschnitt verbunden ist. Zwischen der zweiten Seite des Aufschmelzabschnitts und der ersten Seite des Stützabschnitts ist insbesondere ein Versatzwinkel f ausgebildet, wobei insbesondere gilt: - 90° ≤ f ≤ 90°, insbesondere - 45° ≤ f ≤ 45°, insbesondere - 15° ≤ f ≤ 15°, insbesondere - 5° ≤ f ≤ 5°, insbesondere - 1° ≤ f ≤ 1°, und insbesondere f = 0°. Positive Versatzwinkel f sind Versatzwinkel entgegen der vordefinierten Drehrichtung. Positive Versatzwinkel wirken fördernd. Demgegenüber sind negative Versatzwinkel f Versatzwinkel in der vordefinierten Drehrichtung. Negative Versatzwinkel wirken rückstauend. Je nach aufzubereitendem Material kann nach der Aufschmelzung eine Förderung oder ein Rückstau des Materials erwünscht sein. Vorzugsweise ist der Versatzwinkel f zwischen einer zweiten Seite einer Knetscheibe des Aufschmelzabschnitts und einer ersten Seite einer Knetscheibe des Stützabschnitts ausgebildet. Vorzugsweise ist der Versatzwinkel f gleich dem Versatzwinkel e.

Ein Behandlungselement nach Anspruch 14 gewährleistet einen geringen Verschleiß und eine hohe Standzeit. Der Stützabschnitt umfasst eine Anzahl M von Knetscheiben, wobei insbesondere gilt: 1 ≤ M ≤ 4, und insbesondere 2 ≤ M ≤ 3. Die Knetscheiben können eingängig bis viergängig ausgebildet sein, vorzugsweise sind die Knetscheiben zweigängig oder dreigängig ausgebildet. Die Knetscheiben können identisch und/oder unterschiedlich ausgebildet sein.

Vorzugsweise umfasst der Stützabschnitt mindestens zwei Knetscheiben, die in der Förderrichtung unmittelbar nacheinander angeordnet sind. Jede der Knetscheiben umfasst eine erste Seite, die bezogen auf die Förderrichtung stromaufwärts gerichtet ist, und eine zweite Seite, die bezogen auf die Förderrichtung stromabwärts gerichtet ist. Zwischen den ersten Seiten und/oder den zweiten Seiten der mindestens zwei Knetscheiben ist ein Versatzwinkel g ausgebildet, wobei insbesondere gilt: 0° ≤ g ≤ 180°, insbesondere 15° ≤ g ≤ 120°, und insbesondere 30° ≤ g ≤ 90°.

Die mindestens eine Knetscheibe ist vorzugsweise unverdrillt bzw. nicht verdrillt. Vorzugsweise ist jede Knetscheibe des Stützabschnitts bzw. sind alle Knetscheiben des Stützabschnitts unverdrillt bzw. nicht verdrillt. Ein Verdrillwinkel beträgt somit 0°. Jede Knetscheibe weist eine erste Seite auf, die bezogen auf die Förderrichtung stromaufwärts gerichtet ist, und eine zweite Seite, die bezogen auf die Förderrichtung stromabwärts gerichtet ist. Die erste Seite und die zweite Seite der jeweiligen Knetscheibe sind somit deckungsgleich und/oder weisen keinen Verdrillwinkel zueinander auf.

Ein Behandlungselement nach Anspruch 15 gewährleistet einen geringen Verschleiß und eine hohe Standzeit. Die Breite Ls ist auf die Förderrichtung bezogen. Weist der Stützabschnitt mehrere Knetscheiben auf, so können die Knetscheiben eine identische Breite Ls und/oder unterschiedliche Breiten Ls haben. Vorzugsweise ist die Breite Ls der in Förderrichtung gesehen letzten Knetscheibe des Stützabschnitts geringer als die Breite Ls einer stromaufwärts angeordneten Knetscheibe des Stützabschnitts. Hierdurch kann vermieden werden, dass eine unerwünscht große Breite entsteht, wenn eine stromabwärts angeordnete Knetscheibe eines weiteren Behandlungselements ohne Versatzwinkel angeordnet wird.

Ein Behandlungselement nach Anspruch 16 gewährleistet einen geringen Verschleiß und eine hohe Standzeit. Der Aufschmelzabschnitt und/oder der Förderabschnitt ist im Vergleich zu dem Stützabschnitt durchmesserreduziert. Dadurch, dass der Außendurchmesser D_{AA} und/oder der Außendurchmesser D_{AF} im Vergleich zu dem Außendurchmesser D_{AS} reduziert ist, wird die Belastung auf das Behandlungselement im Bereich des Aufschmelzabschnitts und/oder des Förderabschnitts reduziert. Gleichzeitig stellt der Stützabschnitt aufgrund des größeren Außendurchmessers D_{AS} eine hohe Stützwirkung bereit, so dass radiale Bewegungen des Behandlungselements reduziert werden.

Der Außendurchmesser D_{AA} des Aufschmelzabschnitts kann über die Länge des Aufschmelzabschnitts bzw. in Bezug auf nacheinander angeordnete Knetscheiben des Aufschmelzabschnitts konstant sein und/oder in der Förderrichtung steigen und/oder in der Förderrichtung sinken. Der Außendurchmesser D_{AA} kann sich entlang der Länge des Aufschmelzabschnitts stetig und/oder unstetig ändern.

Der Außendurchmesser D_{AF} des Förderabschnitts kann über die Länge des Förderabschnitts bzw. in Bezug auf nacheinander angeordnete Förderelemente des Förderabschnitts konstant sein und/oder in der Förderrichtung steigen und/oder in der Förderrichtung sinken. Der Außendurchmesser D_{AF} kann sich entlang der Länge des Förderabschnitts stetig und/oder unstetig ändern.

Vorzugsweise ist zwischen dem Förderabschnitt und dem Aufschmelzabschnitt und/oder zwischen dem Aufschmelzabschnitt und dem Stützabschnitt ein Distanzelement angeordnet. Das Distanzelement ist einteilig mit dem Förderabschnitt und dem Aufschmelzabschnitt bzw. mit dem Aufschmelzabschnitt und dem Stützabschnitt verbunden. Vorzugsweise ist zwischen mindestens zwei Knetscheiben des Aufschmelzabschnitts und/oder zwischen mindestens zwei Knetscheiben des Stützabschnitts ein Distanzelement angeordnet. Das Distanzelement ist einteilig mit den Knetscheiben verbunden. Das Distanzelement ist beispielsweise im Querschnitt kreisrund oder entsprechend des Profils des Förderabschnitts und/oder des Aufschmelzabschnitts und/oder des Stützabschnitts ausgebildet. Für einen Außendurchmesser D_{AD} des Distanzelements gilt: D_{AD} < D_{AF} und/oder D_{AD} < D_{AA} und/oder D_{AD} < D_{AS}. Vorzugsweise gilt für eine Breite L_{D} des jeweiligen Distanzelements bezogen auf die Förderrichtung: 0 < L_{D}/D_{AD} ≤ 0,1, und insbesondere 0,01 ≤ L_{D}/D_{AD} ≤ 0,02. Durch die Distanzelemente können die mindestens zwei Behandlungselementwellen trotz fertigungstechnischer Spiele frei zueinander in den mindestens zwei Gehäusebohrungen rotieren. Ein Innendurchmesser des Distanzelements ist vorzugsweise größer als ein Innendurchmesser der mindestens zwei Knetscheiben.

Der Erfindung liegt ferner die Aufgabe zugrunde, eine Schneckenmaschine zum Behandeln von Material zu schaffen, die einen geringen Verschleiß und eine hohe Standzeit hat.

Diese Aufgabe wird durch eine Schneckenmaschine mit den Merkmalen des Anspruchs 17 gelöst. Die Vorteile der erfindungsgemäßen Schneckenmaschine entsprechen den Vorteilen des beschriebenen Behandlungselements. Vorzugsweise weist die Schneckenmaschine mindestens eine Behandlungselementwelle auf, die eine profilierte Welle umfasst. Auf der profilierten Welle ist mindestens ein erfindungsgemäßes Behandlungselement angeordnet. In jeder Gehäusebohrung ist eine zugehörige Behandlungselementwelle drehbar angeordnet.

Vorzugsweise ist das mindestens eine Behandlungselement in einer Aufschmelzzone und/oder einer Homogenisierungszone der Schneckenmaschine angeordnet. In der Aufschmelzzone und/oder der Homogenisierungszone wirken hohe Belastungen, die durch das mindestens eine erfindungsgemäße Behandlungselement reduziert werden. Vorzugsweise umfasst das mindestens eine erfindungsgemäße Behandlungselement mindestens eine Knetscheibe und ist derart in der Aufschmelzzone und/oder der Homogenisierungszone angeordnet, dass das mindestens eine erfindungsgemäße Behandlungselement ein bezogen auf die Förderrichtung erstes Behandlungselement mit einer Knetscheibe bildet. Anders ausgedrückt, sind in der Aufschmelzzone und/oder der Homogenisierungszone vorzugsweise keine nicht erfindungsgemäßen Behandlungselemente mit einer Knetscheibe stromaufwärts zu dem mindestens einen erfindungsgemäßen Behandlungselement angeordnet.

Vorzugsweise ist die Schneckenmaschine als Mehrwellen-Schneckenmaschine, insbesondere als Zweiwellen-Schneckenmaschine ausgebildet. Die Mehrwellen-Schneckenmaschine weist insbesondere mindestens zwei Gehäusebohrungen auf, die in dem Gehäuse ausgebildet sind. Die mindestens zwei Gehäusebohrungen schneiden einander. Hierdurch bilden die mindestens zwei Gehäusebohrungen insbesondere im Querschnitt die Form einer liegenden Acht aus. Die Mehrwellen-Schneckenmaschine umfasst mindestens zwei Behandlungselementwellen, die insbesondere jeweils eine profilierte Welle umfassen, auf der jeweils mindestens ein erfindungsgemäßes Behandlungselement angeordnet ist. Die Mehrwellen-Schneckenmaschine ist gleichsinnig rotierend ausgebildet, also mit in gleichen Drehrichtungen rotierenden mindestens zwei Behandlungselementwellen. Die mindestens zwei Behandlungselementwellen sind vorzugsweise einander dichtkämmend ausgebildet und/oder angeordnet. Vorzugsweise weist jede Behandlungselementwelle mindestens ein erfindungsgemäßes Behandlungselement auf, die bezogen auf die Förderrichtung an gleichen Positionen angeordnet sind.

Die mindestens eine Gehäusebohrung hat einen Durchmesser D. Der Förderabschnitt weist einen Außendurchmesser D_{AF} auf, wobei insbesondere gilt: 0,8 ≤ D_{AF}/D < 1, insbesondere 0,9 ≤ D_{AF}/D ≤ 0,99, und insbesondere 0,95 ≤ D_{AF}/D ≤ 0,98.

Der Aufschmelzabschnitt weist einen Außendurchmesser D_{AA} auf, wobei insbesondere gilt: 0,8 ≤ D_{AA}/D < 1, insbesondere 0,9 ≤ D_{AA}/D ≤ 0,99, und insbesondere 0,95 ≤ D_{AA}/D ≤ 0,98.

Der Stützabschnitt weist einen Außendurchmesser D_{AS} auf, wobei insbesondere gilt: 0,95 ≤ D_{AS}/D < 1, insbesondere 0,98 ≤ D_{AS}/D ≤ 0,998, und insbesondere 0,99 ≤ D_{AS}/D ≤ 0,995.

Vorzugsweise gilt: D_{AF}/D < D_{AS}/D und/oder D_{AA}/D < D_{AS}/D.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnitten dargestellte Vorrichtung zum Behandeln von Material mit einer Mehrwellen-Schneckenmaschine,
- Fig. 2: eine teilweise geschnittene Draufsicht auf die Vorrichtung in Fig. 1,
- Fig. 3: eine Schnittdarstellung der Mehrwellen-Schneckenmaschine entlang der Schnittlinie III-III in Fig. 2,
- Fig. 4: eine perspektivische Ansicht von zwei paarweise nebeneinander angeordneten Behandlungselementen gemäß einem ersten Ausführungsbeispiel, die Teil der Mehrwellen-Schneckenmaschine in Fig. 1 sind,
- Fig. 5: eine erste Seitenansicht eines der Behandlungselemente in Fig. 4,
- Fig. 6: eine zweite Seitenansicht des Behandlungselements in Fig. 5,
- Fig. 7: eine Schnittansicht durch das Behandlungselement entlang der Schnittlinie VII-VII in Fig. 5,
- Fig. 8: eine perspektivische Ansicht von zwei paarweise nebeneinander angeordneten Behandlungselementen gemäß einem zweiten Ausführungsbeispiel,
- Fig. 9: eine Seitenansicht eines der Behandlungselemente in Fig. 8 und
- Fig. 10: eine Schnittansicht durch das Behandlungselement entlang der Schnittlinie X-X in Fig. 9.

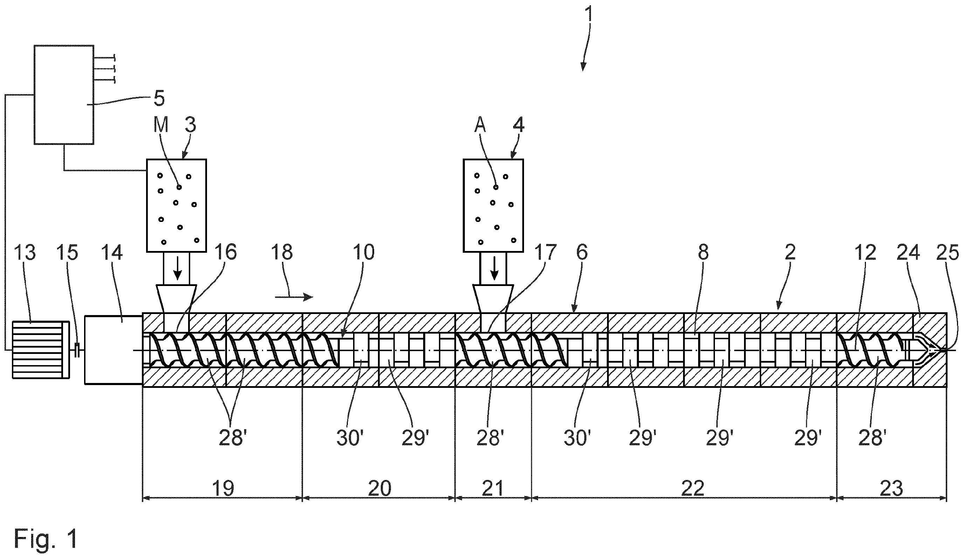

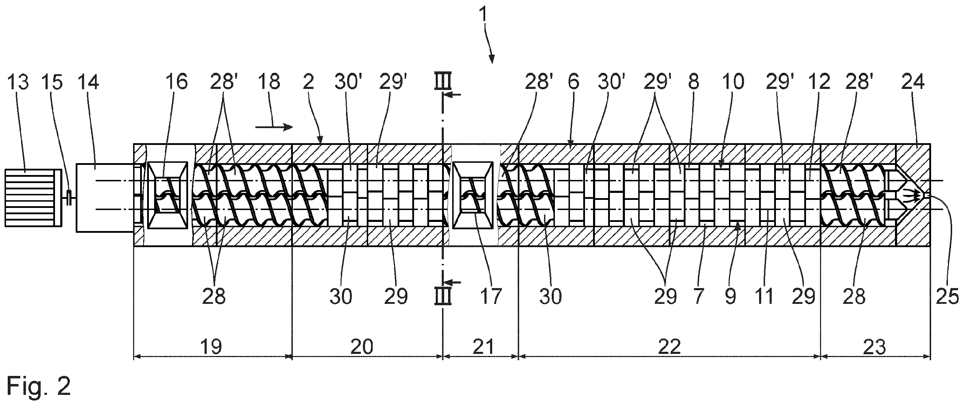

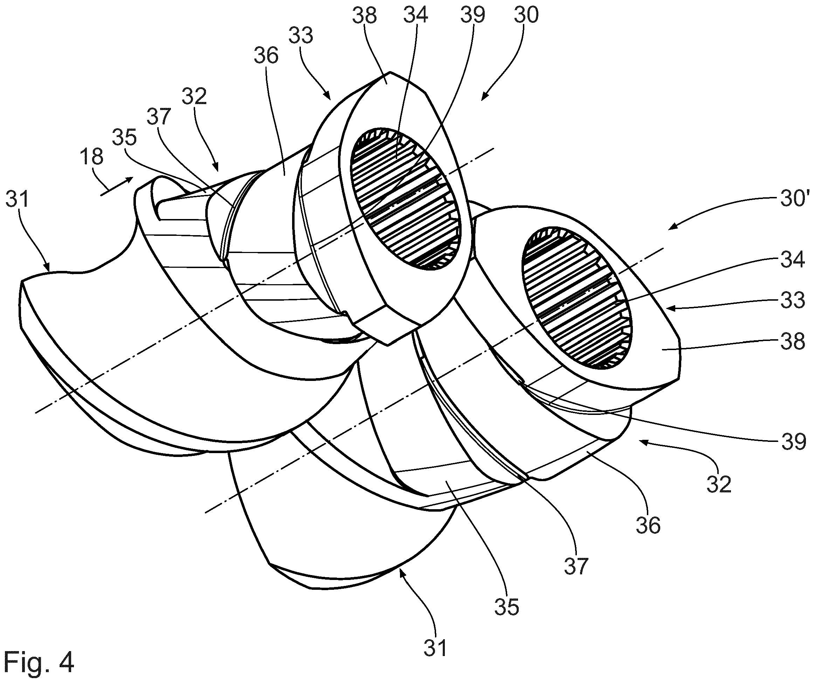

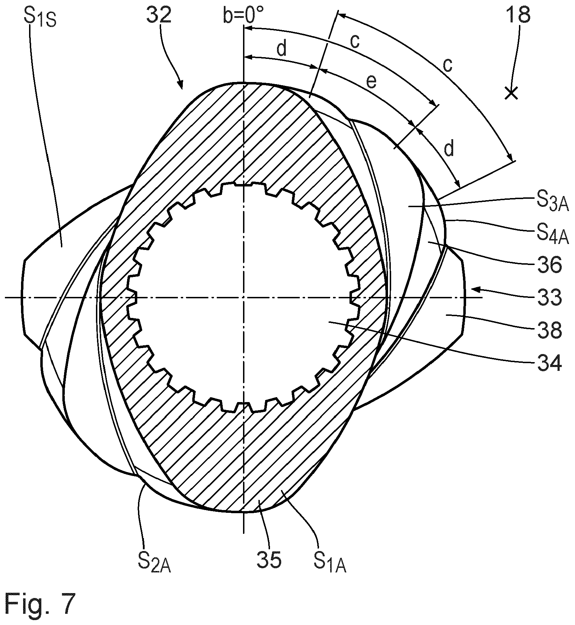

Nachfolgend ist anhand der Fig. 1 bis 7 ein erstes Ausführungsbeispiel der Erfindung beschrieben. Eine Vorrichtung 1 zum Behandeln und Aufbereiten von Material M umfasst eine Mehrwellen-Schneckenmaschine 2, eine erste Dosiereinrichtung 3, eine zweite Dosiereinrichtung 4 und eine Steuereinrichtung 5. Das Material M ist insbesondere ein Kunststoff-Material.

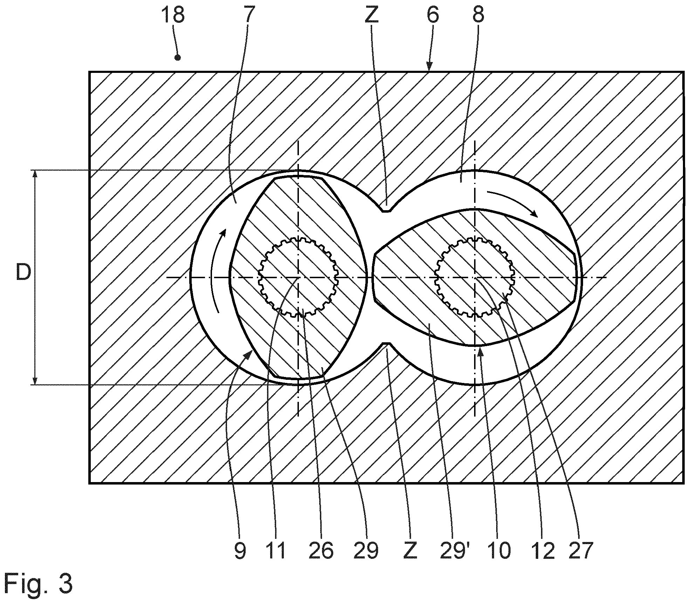

Die Mehrwellen-Schneckenmaschine 2 umfasst ein Gehäuse 6, in dem zwei einander durchdringende Gehäusebohrungen 7, 8 ausgebildet sind. Die Gehäusebohrungen 7, 8 haben im Querschnitt die Form einer liegenden Acht. Durch die zwei einander durchdringenden Gehäusebohrungen 7, 8 entstehen Zwickelbereiche Z. Als Zwickelbereiche Z werden die spitz zulaufenden Bereiche des Gehäuses 6 bezeichnet. Die Zwickelbereiche Z sind in Fig. 3 veranschaulicht. In den Gehäusebohrungen 7, 8 sind Behandlungselementwellen 9, 10 um zugehörige Drehachsen 11, 12 drehbar angeordnet. Die Behandlungselementwellen 9, 10 sind mittels eines Antriebsmotors 13 über ein Verteilergetriebe 14 gleichsinnig, also in gleichen Drehrichtungen, drehantreibbar. Zwischen dem Antriebsmotor 13 und dem Verteilergetriebe 14 ist eine Kupplung 15 angeordnet.

In dem Gehäuse 6 ist eine erste Zuführöffnung 16 und eine zweite Zuführöffnung 17 ausgebildet, die in die Gehäusebohrungen 7, 8 münden. Die zweite Zuführöffnung 17 ist in einer Förderrichtung 18 stromabwärts zu der ersten Zuführöffnung 16 angeordnet. Die erste Dosiereinrichtung 3 mündet in die erste Zuführöffnung 16 und dient zum Zuführen des Materials M. Die zweite Dosiereinrichtung 4 mündet in die zweite Zuführöffnung 17 und dient zum Zuführen mindestens eines Additivs A. Die erste Dosiereinrichtung 3 und/oder die zweite Dosiereinrichtung 4 ist beispielsweise als gravimetrische Dosiereinrichtung ausgebildet.

Die Mehrwellen-Schneckenmaschine 2 umfasst in der Förderrichtung 18 nacheinander eine erste Einzugszone 19, eine Aufschmelzzone 20, eine zweite Einzugszone 21, eine Homogenisierungszone 22 und eine Austragszone 23. Das Gehäuse 6 ist in der Austragszone 23 durch eine Austragsplatte 24 abgeschlossen, die eine Austragsöffnung 25 ausbildet.

Die Behandlungselementwellen 9, 10 umfassen jeweils eine profilierte Welle 26, 27, auf denen paarweise nebeneinander Schneckenelemente 28, 28', Knetelemente 29, 29' und erfindungsgemäße Behandlungselemente 30, 30' angeordnet sind. In der ersten Einzugszone 19 sind Schneckenelemente 28, 28' auf den Wellen 26, 27 in drehmomentübertragender Weise angeordnet. In der Aufschmelzzone 20 sind erfindungsgemäße Behandlungselemente 30, 30' und Knetelemente 29, 29' in drehmomentübertragender Weise auf den Wellen 26, 27 angeordnet. In der zweiten Einzugszone 21 sind Schneckenelemente 28, 28' in drehmomentübertragender Weise auf den Wellen 26, 27 angeordnet. In der Homogenisierungszone 22 sind erfindungsgemäße Behandlungselemente 30, 30' und Knetelemente 29, 29' in drehmomentübertragender Weise auf den Wellen 26, 27 angeordnet. In der Austragszone 23 sind Schneckenelemente 28, 28' in drehmomentübertragender Weise auf den Wellen 26, 27 angeordnet. Die Schneckenelemente 28, 28' und/oder die Knetelemente 29, 29' sind üblich ausgebildet. Die Schneckenelemente 28, 28' und/oder die Knetelemente 29, 29' und/oder die erfindungsgemäßen Behandlungselemente 30, 30' sind insbesondere zweigängig ausgebildet. Die Knetelemente 29, 29' sind beispielsweise als einzelne Knetscheiben und/oder als Knetblöcke mit mehreren einteilig miteinander verbundenen Knetscheiben ausgebildet.

Die erfindungsgemäßen Behandlungselemente 30, 30' sind identisch ausgebildet. Nachfolgend ist lediglich ein Behandlungselement 30 beschrieben.

Das Behandlungselement 30 dient zum Behandeln und/oder Aufschmelzen von Material M. Das Behandlungselement 30 umfasst einen Förderabschnitt 31, einen Aufschmelzabschnitt 32 und einen Stützabschnitt 33. Der Aufschmelzabschnitt 32 ist in der Förderrichtung 18 nach dem Förderabschnitt 31 angeordnet. Der Förderabschnitt 31 und der Aufschmelzabschnitt 32 sind einteilig miteinander verbunden. Der Stützabschnitt 33 ist in der Förderrichtung 18 nach dem Aufschmelzabschnitt 32 angeordnet. Der Aufschmelzabschnitt 32 und der Stützabschnitt 33 sind einteilig miteinander verbunden.

Das Behandlungselement 30 weist eine profilierte Bohrung 34 auf, die durch den Förderabschnitt 31, den Aufschmelzabschnitt 32 und den Stützabschnitt 33 verläuft. Die profilierte Bohrung 34 dient zum formschlüssigen Anordnen des Behandlungselements 30 auf der zugehörigen profilierten Welle 26, so dass von der Welle 26 ein Drehmoment auf das Behandlungselement 30 übertragbar ist.

Der Förderabschnitt 31 ist als Förderelement bzw. Schneckenelement ausgebildet. Der Förderabschnitt 31 umfasst eine erste Seite S_{1F}, die in der Förderrichtung 18 stromaufwärts gerichtet ist, und eine zweite Seite S_{2F}, die in der Förderrichtung 18 stromabwärts gerichtet ist. Der Förderabschnitt 31 hat ein zweigängiges Profil. Der Förderabschnitt 31 weist einen Außendurchmesser D_{AF} und in der Förderrichtung 18 eine Länge L_{F} auf. Ferner definiert der Förderabschnitt 31 eine Schraubenlinie S_{F}, die bei einer vollen Umdrehung, also bei einem Winkel von 360°, eine Ganghöhe P_{F} hat. Die Ganghöhe P_{F} ist auch als Steigung bezeichnet. Für ein Verhältnis P_{F}/D_{AF} der Ganghöhe P_{F} zu dem Außendurchmesser D_{AF} gilt insbesondere: 0,75 ≤ P_{F}/D_{AF} ≤ 2, insbesondere 1 ≤ P_{F}/D_{AF} ≤ 1,75, und insbesondere 1,25 ≤ P_{F}/D_{AF} ≤ 1,5.

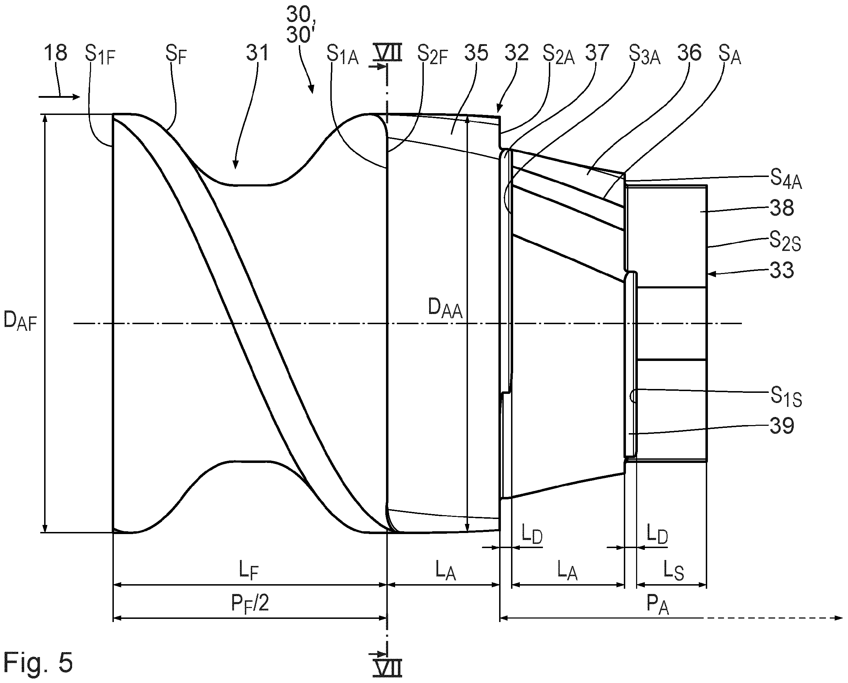

Ferner gilt für ein Verhältnis L_{F}/P_{F} der Länge L_{F} zu der Ganghöhe P_{F} insbesondere: 0,2 ≤ L_{F}/P_{F} ≤ 1,5, insbesondere 0,3 ≤ L_{F}/P_{F} ≤ 1,2, und insbesondere 0,4 ≤ L_{F}/P_{F} ≤ 0,9. Für das Ausführungsbeispiel in Fig. 5 gilt beispielsweise: L_{F}/P_{F} = 0,5.

Der Aufschmelzabschnitt 32 umfasst eine Anzahl N von Knetscheiben, wobei allgemein gilt: 1 ≤ N ≤ 7, insbesondere 2 ≤ N ≤ 6, und insbesondere 3 ≤ N ≤ 5. Für das Ausführungsbeispiel gemäß den Fig. 1 bis 7 gilt beispielhaft: N = 2. Der Aufschmelzabschnitt 32 umfasst somit eine erste Knetscheibe 35 und eine zweite Knetscheibe 36. Zwischen der ersten Knetscheibe 35 und der zweiten Knetscheibe 36 ist ein erstes Distanzelement 37 angeordnet. Das Distanzelement 37 ist in der Förderrichtung 18 nach der ersten Knetscheibe 35 angeordnet. Die zweite Knetscheibe 36 ist in der Förderrichtung 18 nach dem Distanzelement 37 angeordnet. Die erste Knetscheibe 35, das Distanzelement 37 und die zweite Knetscheibe 36 sind einteilig miteinander ausgebildet.

Die erste Knetscheibe 35 hat eine erste Seite S_{1A}, die in der Förderrichtung 18 stromaufwärts gerichtet ist. Ferner hat die erste Knetscheibe 35 eine zweite Seite S_{2A}, die in der Förderrichtung 18 stromabwärts gerichtet ist. Entsprechend hat die zweite Knetscheibe 36 eine erste Seite S_{3A}, die in der Förderrichtung 18 stromaufwärts gerichtet ist, und eine zweite Seite S_{4A}, die in der Förderrichtung 18 stromabwärts gerichtet ist.

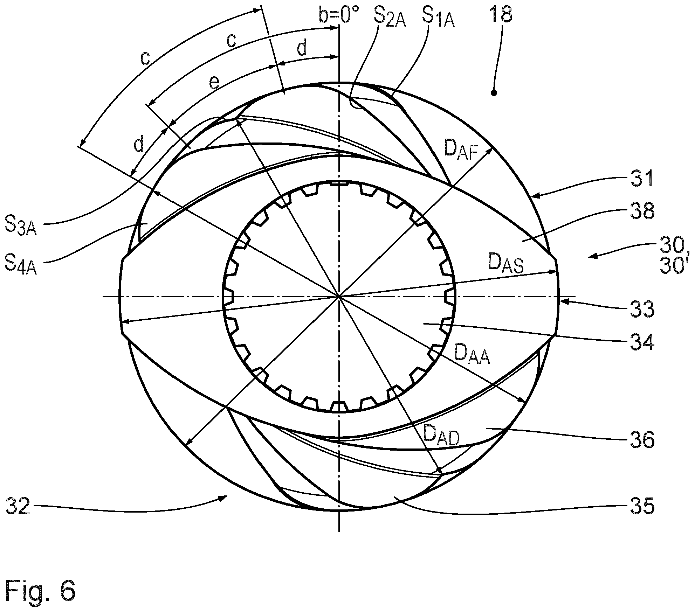

Die zweite Seite S_{2F} des Förderabschnitts 31 ist einteilig mit der ersten Seite S_{1A} der ersten Knetscheibe 35 verbunden. Zwischen dem Förderabschnitt 31 und dem Aufschmelzabschnitt 32, also zwischen der zweiten Seite S_{2F} des Förderabschnitts 31 und der ersten Seite S_{1A} der ersten Knetscheibe 35, ist ein Versatzwinkel b definiert, wobei allgemein gilt: 0° ≤ b ≤ 90°, insbesondere 5° ≤ b ≤ 45°, und insbesondere 10° ≤ b ≤ 15°. Für das Ausführungsbeispiel gemäß den Fig. 1 bis 7 gilt beispielhaft: b = 0°. Der Versatzwinkel b ist lediglich in Fig. 6 veranschaulicht.

Die erste Knetscheibe 35 und die zweite Knetscheibe 36 sind verdrillt ausgebildet. Die erste Knetscheibe 35 hat zwischen den Seiten S_{1A} und S_{2A} einen Verdrillwinkel d. Entsprechend hat die zweite Knetscheibe 36 zwischen den Seiten S_{A3} und S_{A4} einen Verdrillwinkel d. Für den Verdrillwinkel d gilt allgemein: 0° < d ≤ 30°, insbesondere 5° ≤ d ≤ 25°, und insbesondere 10° ≤ d ≤ 20°. Für das Ausführungsbeispiel gemäß den Fig. 1 bis 7 gilt beispielhaft: d = 15°.

Zwischen der ersten Seite S_{1A} der ersten Knetscheibe 35 und der ersten Seite S_{3A} der zweiten Knetscheibe 36 ist ein Versatzwinkel c ausgebildet. Da die Knetscheiben 35, 36 einen identischen Verdrillwinkel d haben, ist auch zwischen der zweiten Seite S_{2A} der ersten Knetscheibe 35 und der zweiten Seite S_{4A} der zweiten Knetscheibe 36 der Versatzwinkel c ausgebildet. Für den Versatzwinkel c gilt allgemein: 0° ≤ c ≤ 90°, insbesondere 15° ≤ c ≤ 75°, und insbesondere 30° ≤ c ≤ 60°. Für das Ausführungsbeispiel gemäß den Fig. 1 bis 7 gilt beispielhaft: c = 45°.

Weiterhin ist zwischen der zweiten Seite S_{2A} der ersten Knetscheibe 35 und der ersten Seite S_{3A} der zweiten Knetscheibe 36 ein Versatzwinkel e ausgebildet. Für den Versatzwinkel e gilt insbesondere: e = c - d. Für den Versatzwinkel e gilt allgemein: 5° ≤ e ≤ 70°, insbesondere 10° ≤ e ≤ 55°, und insbesondere 15° ≤ e ≤ 40°. Für das Ausführungsbeispiel gemäß den Fig. 1 bis 7 gilt beispielhaft: e = 30°.

Die Knetscheiben 35, 36 haben einen Außendurchmesser D_{AA} und in der Förderrichtung 18 eine Breite L_{A}. Der Außendurchmesser D_{AA} der Knetscheiben 35, 36 kann identisch und/oder unterschiedlich sein. Entsprechend kann die Breite L_{A} der Knetscheiben 35, 36 identisch und/oder unterschiedlich sein. Für ein Verhältnis L_{A}/D_{AA} der Breite L_{A} zu dem Außendurchmesser D_{AA} gilt insbesondere: 0,1 ≤ L_{A}/D_{AA} ≤ 0,4, insbesondere 0,15 ≤ L_{A}/D_{AA} ≤ 0,35, und insbesondere 0,2 ≤ L_{A}/D_{AA} ≤ 0,3.

Die Knetscheiben 35, 36 definieren aufgrund der Verdrillung bzw. des Verdrillwinkels d eine Schraubenlinie S_{A}. Die Schraubenlinie S_{A} hat bei einer vollen Umdrehung, also bei einem Winkel von 360°, eine Ganghöhe P_{A}. Die Ganghöhe P_{A} wird auch als Steigung bezeichnet. Die Ganghöhe P_{A} ist in Fig. 5 lediglich angedeutet. Für ein Verhältnis P_{A}/D_{AA} gilt insbesondere: 5 ≤ P_{A}/D_{AA} ≤ 10, insbesondere 6 ≤ P_{A}/D_{AA} ≤ 9, und insbesondere 7 ≤ P_{A}/D_{AA} ≤ 8.

Der Stützabschnitt 33 umfasst eine Knetscheibe 38 und ein zweites Distanzelement 39. Die Knetscheibe 38 ist einteilig mit dem zweiten Distanzelement 39 verbunden. Die Knetscheibe 38 ist in der Förderrichtung 18 nach dem zweiten Distanzelement 39 angeordnet. Die Knetscheibe 38 umfasst eine erste Seite S_{1S}, die in der Förderrichtung 18 stromaufwärts gerichtet ist, und eine zweite Seite S_{2S}, die in der Förderrichtung 18 stromabwärts gerichtet ist. Das zweite Distanzelement 39 ist mit der zweiten Seite S_{4A} der Knetscheibe 36 und der ersten Seite Sis der Knetscheibe 38 einteilig verbunden.

Die Knetscheibe 38 ist unverdrillt bzw. nicht verdrillt. Dies bedeutet, dass ein Verdrillwinkel zwischen der ersten Seite S_{1S} und der zweiten Seite S_{2S} gleich Null ist. Die erste Seite S_{1S} und die zweite Seite S_{2S} der Knetscheibe 38 sind somit in der Förderrichtung 18 deckungsgleich zueinander.

Die Knetscheibe 38 hat einen Außendurchmesser D_{AS} und in der Förderrichtung 18 eine Breite Ls. Für ein Verhältnis L_{S}/D_{AS} der Breite Ls zu dem Außendurchmesser D_{AS} gilt insbesondere: 0,05 ≤ L_{S}/D_{AS} ≤ 0,5, insbesondere 0,1 ≤ L_{S}/D_{AS} ≤ 0,35, und insbesondere 0,15 ≤ L_{S}/D_{AS} ≤ 0,2.

Die Distanzelemente 37, 39 haben jeweils einen Außendurchmesser D_{AD} und in der Förderrichtung 18 eine Breite L_{D}. Der Außendurchmesser D_{AD} der Distanzelemente 37, 39 kann identisch und/oder unterschiedlich sein. Ferner kann die Breite L_{D} der Distanzelemente 37, 39 identisch und/oder unterschiedlich sein. Für ein Verhältnis L_{D}/D_{AD} der Breite L_{D} zu dem Außendurchmesser D_{AD} gilt insbesondere: 0 < L_{D}/D_{AD} ≤ 0,1, und insbesondere 0,01 ≤ L_{D}/D_{AD} ≤ 0,02.

Es gilt insbesondere: D_{AA} < D_{AS} und/oder D_{AF} < D_{AS}. Ferner gilt insbesondere D_{AD} ≤ D_{AS} und/oder D_{AD} ≤ D_{AA} und/oder D_{AD} ≤ D_{AF}.

Die Gehäusebohrungen 7, 8 weisen einen Durchmesser D auf.

Für ein Verhältnis D_{AF}/D gilt insbesondere: 0,8 ≤ D_{AF}/D < 1, insbesondere 0,9 ≤ D_{AF}/D ≤ 0,99, und insbesondere 0,95 ≤ D_{AF}/D ≤ 0,98.

Für ein Verhältnis D_{AA}/D gilt insbesondere: 0,8 ≤ D_{AA}/D < 1, insbesondere 0,9 ≤ D_{AA}/D ≤ 0,99, und insbesondere 0,95 ≤ D_{AA}/D ≤ 0,98.

Für ein Verhältnis D_{AS}/D gilt insbesondere: 0,95 ≤ D_{AS}/D < 1, insbesondere 0,98 ≤ D_{AS}/D ≤ 0,998, und insbesondere 0,99 ≤ D_{AS}/D ≤ 0,995.

Nachfolgend ist die Funktionsweise der Vorrichtung 1 und der erfindungsgemäßen Behandlungselemente 30, 30' beschrieben:
Das aufzubereitende Material M wird als Schüttgut, insbesondere als Pulver und/oder Granulat, mittels der ersten Dosiereinrichtung 3 durch die erste Zuführöffnung 16 in die Mehrwellen-Schneckenmaschine 2 zugeführt. In der ersten Einzugszone 19 wird das Material M mittels der Schneckenelemente 28, 28' in der Förderrichtung 18 zu der Aufschmelzzone 20 gefördert.

In der Aufschmelzzone 20 wird das Material M mittels der erfindungsgemäßen Behandlungselemente 30, 30' und der in Förderrichtung 18 danach angeordneten Knetelemente 29, 29' aufgeschmolzen. Die Behandlungselemente 30, 30' reduzieren hierbei die Belastung auf die Wellen 26, 27, auf die Behandlungselemente 30, 30' selbst und auf das Gehäuse 6. Dadurch, dass der Förderabschnitt 31 und der Aufschmelzabschnitt 32 einteilig miteinander ausgebildet sind, werden auch bei hohen Belastungen der Förderabschnitt 31 und der Aufschmelzabschnitt 32 nicht auseinander gedrückt, so dass vor der ersten Knetscheibe 35 kein Spalt ausgebildet und in einen entstehenden Spalt Material M oder eine bereits aus dem Material M erzeugte Schmelze in diesen Spalt eindringen könnte. Zudem ist die Steifigkeit der Behandlungselemente 30, 30' in dem kritischen Übergangsbereich zwischen dem Förderabschnitt 31 und dem Aufschmelzabschnitt 32 erhöht, so dass Verformungen und Relativbewegungen der Behandlungselemente 30, 30' und der zugehörigen Wellen 26, 27 reduziert sind. Der einteilig mit dem Aufschmelzabschnitt 32 verbundene Stützabschnitt 33 reduziert zusätzlich Relativbewegungen und Verformungen der Behandlungselemente 30, 30'. Die Belastungen auf die Behandlungselemente 30, 30', auf die Wellen 26, 27 und auf das Gehäuse 6 werden insbesondere in den Zwickelbereichen Z reduziert. Ferner kann über die Versatzwinkel b, c und e sowie den Verdrillwinkel d, die Außendurchmesser D_{AF}, D_{AA} und D_{AS} sowie die Ganghöhen P_{F} und P_{A} sowie die Länge L_{F} und die Breiten L_{A} sowie Ls die Belastung auf die Behandlungselemente 30, 30' in gewünschter Weise eingestellt werden.

In der zweiten Einzugszone 21 wird mittels der zweiten Dosiereinrichtung 4 mindestens ein Additiv A durch die zweite Zuführöffnung 17 in die Mehrwellen-Schneckenmaschine 2 zugeführt. Das mindestens eine Additiv A wird in der zweiten Einzugszone 21 in das aufgeschmolzene Material M zugeführt. Mittels der Schneckenelemente 28, 28' wird das aufgeschmolzene Material M und das mindestens eine Additiv A in der Förderrichtung 18 zu der Homogenisierungszone 22 gefördert.

In der Homogenisierungszone 22 wird das mindestens eine Additiv A mittels der erfindungsgemäßen Behandlungselemente 30, 30' und der danach angeordneten Knetelemente 29, 29' aufgeschmolzen und in das aufgeschmolzene Material M eingemischt. Die Mischung wird in der Homogenisierungszone 22 homogenisiert. Die Vorteile der erfindungsgemäßen Behandlungselemente 30, 30' entsprechen den Vorteilen der in der Aufschmelzzone 20 angeordneten Behandlungselemente 30, 30'.

In der Austragszone 23 wird die homogenisierte Mischung in üblicher Weise durch die Austragsöffnung 25 ausgetragen.

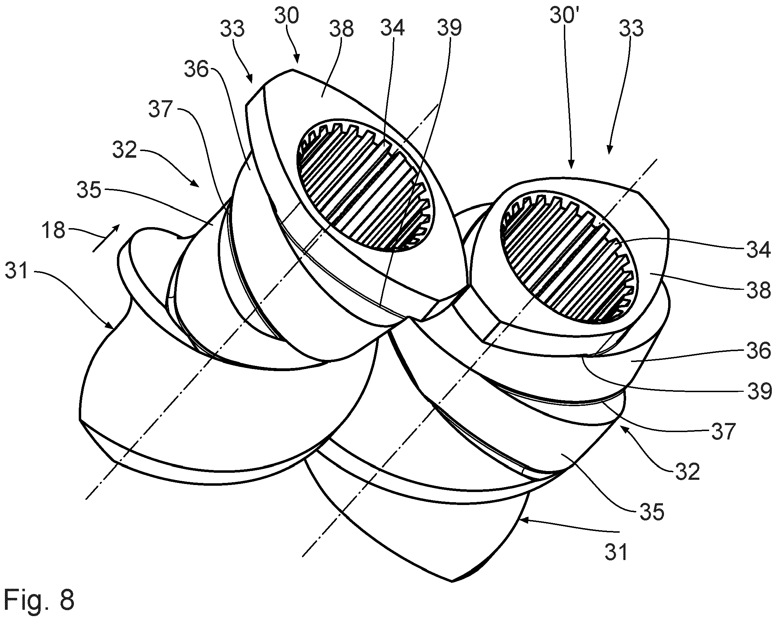

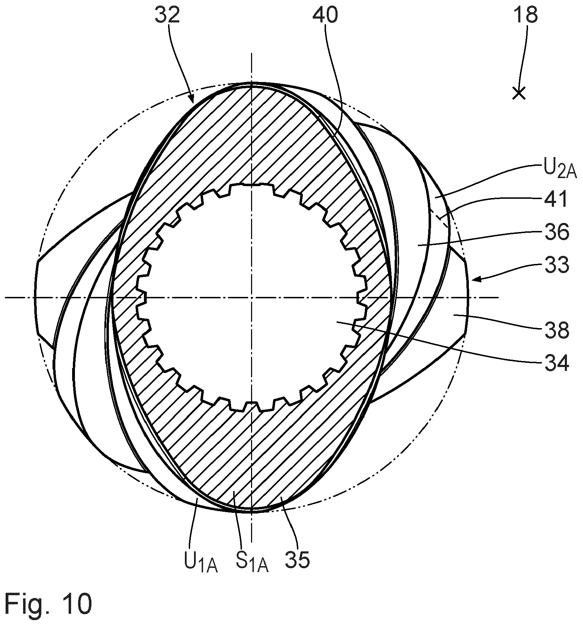

Nachfolgend ist anhand der Fig. 8 bis 10 ein zweites Ausführungsbeispiel der Erfindung beschrieben. Im Unterschied zu dem ersten Ausführungsbeispiel weisen die Knetscheiben 35, 36 des Aufschmelzabschnitts 32 Kantenbrüche 40, 41 auf. Erste Kantenbrüche 40 sind als Fasen ausgebildet, die an der ersten Seite S_{1A} der ersten Knetscheibe 35 angeordnet sind und eine abgeschrägte Oberfläche zwischen der ersten Seite S_{1A} und einer Umfangsseite U_{1A} der ersten Knetscheibe 35 ausbilden.

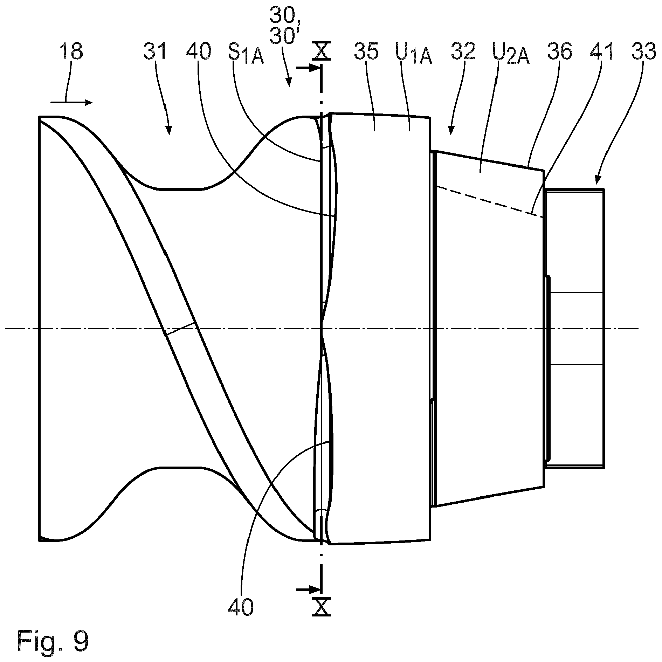

Zweite Kantenbrüche 41 sind an der Umfangsseite U_{1A} der ersten Knetscheibe 35 und an einer Umfangsseite U_{2A} der zweiten Knetscheibe 36 ausgebildet. Die Kantenbrüche 41 führen im Vergleich zu dem ersten Ausführungsbeispiel zu kantenfreien Umfangsseiten U_{1A} und U_{2A}. Zur Veranschaulichung eines Kantenbruchs 41 ist in Fig. 9 eine fiktive Kante auf der Umfangsseite U_{2A} eingezeichnet, die aufgrund des Kantenbruchs 41 tatsächlich nicht vorhanden ist.

Durch die Kantenbrüche 40, 41 wird das Materialvolumen des Behandlungselements 30 bzw. 30' reduziert, so dass das freie Volumen für das aufzubereitende Material M in den Gehäusebohrungen 7, 8 erhöht wird. Hierdurch wird die Belastung auf die Behandlungselemente 30, 30', die Wellen 26, 27 und das Gehäuse 6 weiter reduziert. Durch die Kantenbrüche 41 haben die Knetscheiben 35, 36 ein involutes Profil im Bereich der Umfangsseiten U_{1A} und U_{2A}. Hinsichtlich des weiteren Aufbaus und der Funktionsweise wird auf die Beschreibung des ersten Ausführungsbeispiels verwiesen.

## Patentansprüche

1. Behandlungselement zum Behandeln von Material mittels einer Schneckenmaschine mit
- einem Förderabschnitt (31) und
- einem Aufschmelzabschnitt (32),
-- der in einer Förderrichtung (18) nach dem Förderabschnitt (31) angeordnet ist und
-- der einteilig mit dem Förderabschnitt (31) verbunden ist.

2. Behandlungselement nach Anspruch 1, **dadurch gekennzeichnet, dass** der Aufschmelzabschnitt (32) eine Anzahl N von Knetscheiben (35, 36) umfasst, wobei gilt: 1 ≤ N ≤ 7, insbesondere 2 ≤ N ≤ 6, und insbesondere 3 ≤ N ≤ 5.

3. Behandlungselement nach Anspruch 1 oder 2, **dadurch gekennzeichnet,**
**dass** der Aufschmelzabschnitt (32) mindestens zwei Knetscheiben (35, 36) umfasst, die in der Förderrichtung (18) nacheinander angeordnet sind, und eine jeweilige erste Seite (S_{1A}, S_{3A}) und/oder eine jeweilige zweite Seite (S_{2A}, S_{4A}) der mindestens zwei Knetscheiben (35, 36) zueinander einen Versatzwinkel c haben, wobei gilt: 0° ≤ c ≤ 90°, insbesondere 15° ≤ c ≤ 75°, und insbesondere 30° ≤ c ≤ 60°.

4. Behandlungselement nach mindestens einem der vorangegangenen Ansprüche, **dadurch gekennzeichnet,**
**dass** der Aufschmelzabschnitt (32) mindestens eine Knetscheiben (35, 36) umfasst, die zwischen einer ersten Seite (S_{1A}, S_{3A}) und zweiten Seite (S_{2A}, S_{4A}) verdrillt ist.

5. Behandlungselement nach Anspruch 4, **dadurch gekennzeichnet, dass** die mindestens eine Knetscheibe (35, 36) zwischen der ersten Seite (S_{1A}, S_{3A}) und der zweiten Seite (S_{2A}, S_{4A}) einen Verdrillwinkel d hat, wobei gilt: 0° < d ≤ 30°, insbesondere 5° ≤ d ≤ 25°, und insbesondere 10° ≤ d ≤ 20°.

6. Behandlungselement nach mindestens einem der Ansprüche 4 oder 5,
**dadurch gekennzeichnet,**
**dass** die mindestens eine Knetscheibe (35, 36) eine Ganghöhe P_{A} und einen Außendurchmesser D_{AA} hat, wobei gilt: 5 ≤ P_{A}/D_{AA} ≤ 10, insbesondere 6 ≤ P_{A}/D_{AA} ≤ 9, und insbesondere 7 ≤ P_{A}/D_{AA} ≤ 8.

7. Behandlungselement nach mindestens einem der Ansprüche 4 bis 6,
**dadurch gekennzeichnet,**
**dass** der Aufschmelzabschnitt (32) mindestens zwei Knetscheiben (35, 36) umfasst, die in der Förderrichtung (18) nacheinander angeordnet sind, und eine erste Seite (S_{3A}) einer stromabwärts angeordneten Knetscheibe (36) relativ zu einer zweiten Seite (S_{2A}) einer stromaufwärts angeordneten Knetscheibe (35) einen Versatzwinkel e hat, wobei gilt: 5° ≤ e ≤ 70°, insbesondere 10° ≤ e ≤ 55°, und insbesondere 15° ≤ e ≤ 40°.

8. Behandlungselement nach mindestens einem der vorangegangenen Ansprüche, **dadurch gekennzeichnet,**
**dass** der Aufschmelzabschnitt (32) mindestens eine Knetscheibe (35, 36) mit einer Breite L_{A} und einem Außendurchmesser D_{AA} umfasst, wobei gilt: 0,1 ≤ L_{A}/D_{AA} ≤ 0,4, insbesondere 0,15 ≤ L_{A}/D_{AA} ≤ 0,35, und insbesondere 0,2 ≤ L_{A}/D_{AA} ≤ 0,3.

9. Behandlungselement nach mindestens einem der vorangegangenen Ansprüche, **dadurch gekennzeichnet,**
**dass** der Aufschmelzabschnitt (32) mindestens eine Knetscheibe (35, 36) mit einem Kantenbruch (40, 41) umfasst.

10. Behandlungselement nach mindestens einem der vorangegangenen Ansprüche, **dadurch gekennzeichnet,**
**dass** der Förderabschnitt (31) eine Ganghöhe P_{F} und einen Außendurchmesser D_{AF} hat, wobei gilt: 0,75 ≤ P_{F}/D_{AF} ≤ 2, insbesondere 1 ≤ P_{F}/D_{AF} ≤ 1,75, und insbesondere 1,25 ≤ P_{F}/D_{AF} ≤ 1,5.

11. Behandlungselement nach mindestens einem der vorangegangenen Ansprüche, **dadurch gekennzeichnet,**
**dass** der Förderabschnitt (31) eine Länge L_{F} und eine Ganghöhe P_{F} hat, wobei gilt: 0,2 ≤ L_{F}/P_{F} ≤ 1,5, insbesondere 0,3 ≤ L_{F}/P_{F} ≤ 1,2, und insbesondere 0,4 ≤ L_{F}/P_{F} ≤ 0,9.

12. Behandlungselement nach mindestens einem der vorangegangenen Ansprüche, **dadurch gekennzeichnet,**
**dass** der Förderabschnitt (31) und der Aufschmelzabschnitt (32) zueinander einen Versatzwinkel b haben, wobei gilt: 0° ≤ b ≤ 90°, insbesondere 5° ≤ b ≤ 45°, und insbesondere 10° ≤ b ≤ 15°.

13. Behandlungselement nach mindestens einem der vorangegangenen Ansprüche, **gekennzeichnet,**
**durch** einen Stützabschnitt (33), der in der Förderrichtung (18) nach dem Aufschmelzabschnitt (32) angeordnet ist und einteilig mit dem Aufschmelzabschnitt (32) verbunden ist.

14. Behandlungselement nach Anspruch 13, **dadurch gekennzeichnet, dass** der Stützabschnitt (33) mindestens eine Knetscheibe (38) umfasst, die insbesondere unverdrillt ist.

15. Behandlungselement nach Anspruch 13 oder 14, **dadurch gekennzeichnet,**
**dass** der Stützabschnitt (33) mindestens eine Knetscheibe (38) mit einer Breite Ls und einem Außendurchmesser D_{AS} umfasst, wobei gilt: 0,05 ≤ L_{S}/D_{AS} ≤ 0,5, insbesondere 0,1 ≤ L_{S}/D_{AS} ≤ 0,35, und insbesondere 0,15 ≤ L_{S}/D_{AS} ≤ 0,2.

16. Behandlungselement nach Anspruch 13 bis 15, **dadurch gekennzeichnet,**
**dass** der Aufschmelzabschnitt (32) einen Außendurchmesser D_{AA} und der Stützabschnitt (33) einen Außendurchmesser D_{AS} haben, wobei gilt: D_{AA} ≤ D_{AS},
und/oder
**dass** der Förderabschnitt (31) einen Außendurchmesser D_{AF} und der Stützabschnitt (33) einen Außendurchmesser D_{AS} haben, wobei gilt: D_{AF} < D_{AS}.

17. Schneckenmaschine zum Behandeln von Material mit
- einem Gehäuse (6),
- mindestens einer in dem Gehäuse (6) ausgebildeten Gehäusebohrung (7, 8), und
- mindestens einer Behandlungselementwelle (9, 10), die in der mindestens einen Gehäusebohrung (7, 8) angeordnet ist, wobei die mindestens eine Behandlungselementwelle (9, 10) mindestens ein Behandlungselement (30, 30') nach mindestens einem der Ansprüche 1 bis 16 umfasst.
